# DEMANDE DE BREVET EUROPEEN

(11) **EP 1 459 660 A1**
(43) Date de publication de la demande: **22.09.2004**
(21) Numéro de dépôt: 04356027.5
(22) Date de dépôt: 02.03.2004
(51) Int. Cl.: A47G 25/28

(54) **Cintre pour vêtement en matière plastique à rigidité renforcée**

(30) Priorité: 17.03.2003 FR 0303245
(71) Demandeur: The Zebra Company, 69760 Limonest (FR)
(72) Inventeur: Barre, Bertrand, 01330 Lapeyrouse (FR); Gibert, Xavier, 69680 Chassieu (FR); Lepage, Francis, 69380 Dommartin (FR)
(74) Mandataire: Guerre, Dominique

(57) **Abrégé**

Il s'agit d'un cintre pour vêtement en matière plastique injectée, comprenant un crochet de suspension (2) pour suspendre ledit cintre (1) à un support extérieur au cintre et qui comprend une tête (4) et une base (5), un corps porteur (3) prévu pour supporter au moins un vêtement comprenant au moins un premier (7) et un deuxième bras (8) qui s'étendent selon sensiblement une même direction longitudinale et en sens opposés, le crochet et les deux bras étant venus de matière ensemble en définissant sensiblement un même plan. Les bras comprennent une extrémité distale (9, 11) et une extrémité proximale (10, 12), les extrémités distales des deux bras se raccordant directement à la base du crochet par ramification. Les bras et le crochet sont de section en creux comprenant au moins un fond et deux jambes qui sont orientées sensiblement transversalement au plan du cintre. La section est inscrite dans une forme non anguleuse.

## Description

La présente invention est relative à un cintre pour vêtement en matière plastique injectée.

Plus particulièrement, l'invention concerne les cintres qui peuvent porter au moins un vêtement destiné à être présenté dans un rayon de magasin, ou à être pendu au domicile de l'utilisateur du vêtement.

Les cintres en matière plastique injectée couramment rencontrés comprennent :
- un crochet de suspension pour suspendre ledit cintre à un support extérieur au cintre et qui comprend une tête et une base,
- un corps porteur prévu pour supporter au moins un vêtement, comprenant au moins un premier et un deuxième bras qui s'étendent selon sensiblement une même direction longitudinale et en sens opposés, le crochet et les deux bras étant venus de matière ensemble en définissant sensiblement un même plan,
chacun des premier et deuxième bras comprenant une extrémité distale et une extrémité proximale, les extrémités distales des deux bras se raccordant directement à la base du crochet par ramification, et
les premier et deuxième bras et le crochet étant de section en creux comprenant au moins un fond et deux jambes qui sont orientées sensiblement transversalement au plan du cintre.

Même si de nombreuses tentatives ont déjà été réalisées pour renforcer la rigidité de tels cintres, les cintres du type précité présentent l'inconvénient de se casser fréquemment, ou bien encore de se déformer lorsqu'un vêtement d'un poids trop important y est suspendu.

De plus, les solutions proposées ont abouti à un résultat souvent déceptif pour l'utilisateur, dans la mesure où l'une des faces du cintre présente un aspect qualitatif alors que l'autre face de ce cintre apparaît moins solide.

En outre, la plupart des cintres obtenus en matière plastique injectée dont la rigidité a été renforcée, ont une section non adaptée au portage du vêtement, c'est-à-dire que leur section provoque la déformation de ce vêtement.

La présente invention a donc pour but de proposer un nouveau cintre pour vêtement en matière plastique injectée qui remédie aux inconvénients précités, en ayant une structure renforcée n'entraînant pas une déformation du vêtement destiné à être supporté. D'autre part, la présente invention a pour but de proposer un cintre ayant un bon rapport rigidité/poids, de sorte que la structure ne se déforme pas selon une direction particulière sous le poids du vêtement. La présente invention a en outre pour objet de fournir un cintre dont l'esthétique est améliorée afin que l'utilisateur puisse utiliser le cintre indifféremment en le prenant selon la face avant ou selon la face arrière.

Selon la présente invention, en coopération :
- le crochet a la même section transversale en creux que celle des premier et deuxième bras, c'est-à-dire comprenant un fond et deux jambes
- et la section transversale en creux du crochet se raccorde aux deux extrémités distales des deux bras respectivement, de manière continue, par ramification, c'est-à-dire directement par division selon deux branches en continuité de matière et de section transversale avec respectivement les deux extrémités distales précitées.

Cette disposition permet d'assurer une liaison résistante, entre, d'un côté le crochet de suspension, et de l'autre côté le corps porteur du cintre, et ce sans compromettre la quantité de matière plastique mise en oeuvre, et la réalisation du cintre par injection de matière plastique.

Ainsi, grâce à cette disposition, non seulement le cintre possède une section à structure renforcée ayant un bon compromis rigidité/poids, mais aussi une section dont la forme ne crée pas de déformation des vêtements qui sont accrochés sur ce cintre.

Dans un mode de réalisation préféré, la forme non anguleuse de la section en creux comprend l'une des formes choisies parmi la forme ovale, la forme ronde ou la forme carre-rond.

Selon un autre mode préféré de l'invention, la section est de dimension continûment évolutive selon une première direction s'étendant dans le plan du cintre, et/ou selon une deuxième direction s'étendant dans une direction transversale au plan du cintre, de sorte que le cintre est de section renforcée ou plus importante dans les tronçons à sollicitations élevées.

Selon un autre mode de réalisation, la section en creux comprend en outre deux ailes qui s'étendent respectivement à partir des jambes pour définir un W, de sorte que le cintre comporte une face avant comprenant une gorge et une face arrière comprenant deux gorges. Cette section en W s'étend de manière continue dans le crochet et les bras du cintre, y compris dans la partie de raccordement des extrémités distales des bras avec la base du crochet.

En variante, les ailes ont une concavité tournée vers les jambes de la section.

Encore de manière préférée, le cintre comprend en outre une barre transversale qui s'étend entre les extrémités proximales des bras, et qui est venue de matière avec ces bras.

De préférence, le cintre comprend en outre une nervure qui relie les premier et deuxième bras, au voisinage de leurs extrémités distales.

De toute façon, l'invention sera bien comprise à l'aide de la description qui suit, en référence au dessin schématique annexé, représentant à titre d'exemple non limitatif, une forme de réalisation préférentielle d'un cintre selon l'invention.

La figure 1 est une vue en perspective du cintre selon la présente invention, vue selon sa face avant.

La figure 2 est une vue en plan, de la face arrière du cintre de la figure 1.

Les figures 3 et 4 sont des vues en coupe transversale, selon les lignes III-III et IV-IV du cintre représenté à la figure 2.

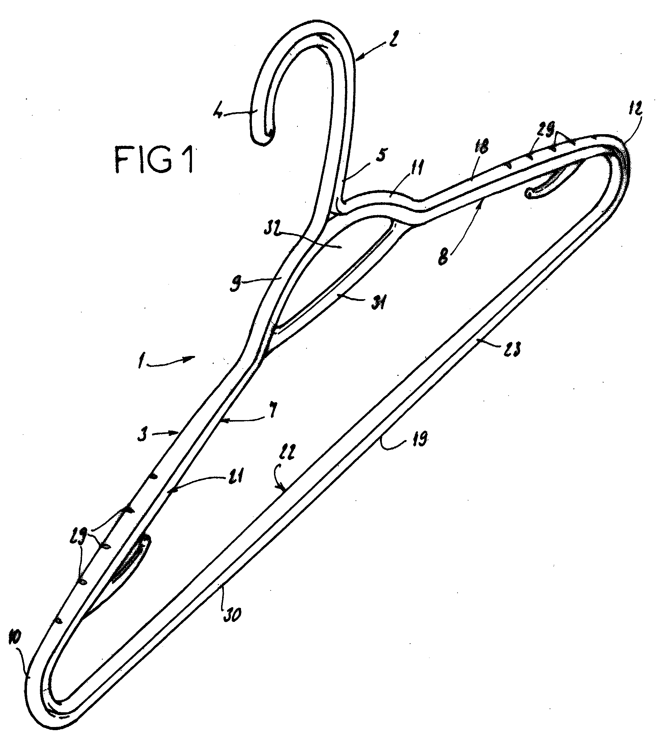

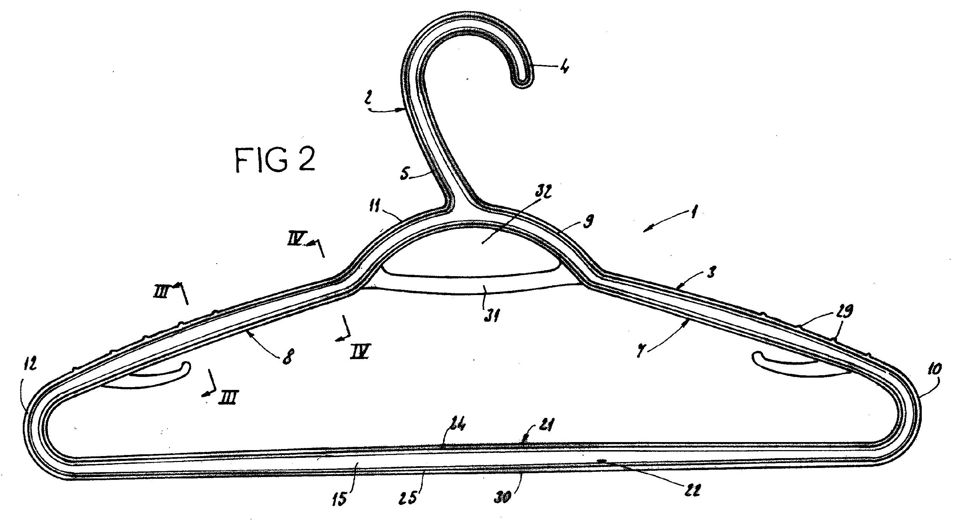

Le cintre 1 représenté aux figures 1 et 2 est adapté pour porter des vêtements et est réalisé en une seule pièce en matière plastique injectée. Il comprend, de manière connue en soi, un crochet de suspension 2 pour suspendre le cintre à un support extérieur, et un corps porteur 3 prévu pour supporter au moins un vêtement et qui est venu de matière avec le crochet de suspension 2.

Le crochet de suspension 2 comprend de manière habituelle une tête 4 qui se prolonge par une base 5. Ainsi, le crochet forme une boucle ouverte qui permet de retenir positivement le cintre sur une barre support (non représentée).

Le corps porteur 3 comprend un premier bras 7 et un deuxième bras 8, qui s'étendent dans un même plan, selon une direction longitudinale mais dans des sens opposés. Les deux bras 7, 8 et le crochet 2 appartiennent au même plan appelé ci-après plan du cintre, et sont venus de matière ensemble.

Chacun des deux bras 7, 8 s'étend sur une certaine longueur dans ledit plan entre une extrémité distale notée respectivement 9, 11 et une extrémité proximale notée respectivement 10, 12. Les bras 7 et 8 se raccordent directement à la base 5 du crochet 2, de sorte que leurs extrémités distales 9 et 11 forment avec la base 5 une ramification en forme de Y.

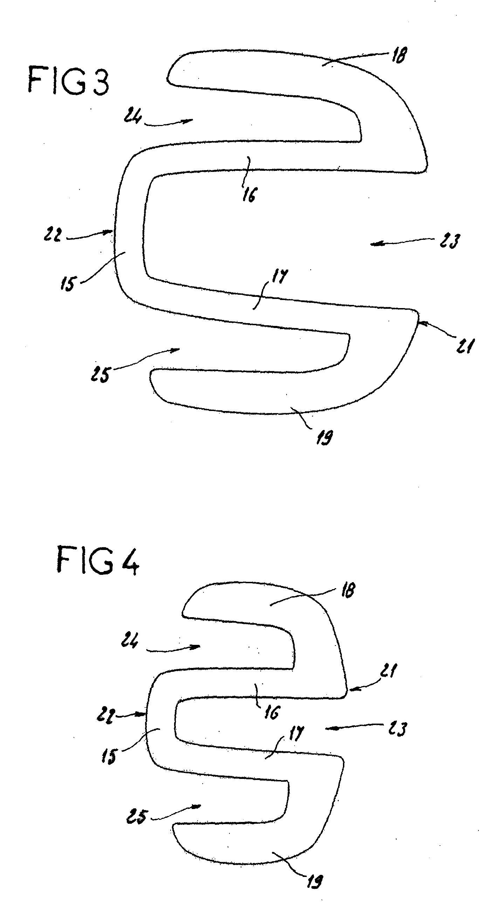

L'ensemble des parties constitutives du cintre, c'est-à-dire à la fois le crochet 2 et les deux bras 7, 8 ont une même section (transversale, c'est-à-dire perpendiculaire au plan au cintre) en creux, de sorte qu'ils comprennent chacun (figures 3 et 4) au moins un fond 15 et deux jambes 16, 17 qui s'étendent à partir de ce fond 15. La forme en creux débouche sensiblement transversalement au plan du cintre, de sorte que les deux jambes 16 et 17 s'étendent sensiblement transversalement à ce plan. Ainsi, la section en creux débouche soit sur la face avant 21 du cintre, soit sur la face arrière 22 de ce cintre.

De préférence, la section en creux du cintre 1 comprend deux autres ailes 18 et 19, qui s'étendent respectivement à partir des jambes 16, 17, en formant des retours. La section en creux ainsi définie est de forme en W.

La face avant 21 du cintre 1 comporte par conséquent une gorge 23, tandis que la face arrière 22 de ce cintre comporte deux gorges 24, 25.

De préférence, la forme en creux s'étend de manière continue sur toutes les parties constitutives du cintre 1, y compris dans la partie de raccordement des extrémités distales 9, 11 des bras 7, 8 avec la base 5 du crochet 2. Ainsi, la gorge 23 s'étend de manière continue, sur une face du cintre, sur toute la longueur développée du cintre, tandis que les deux gorges 24 et 25 s'étendent également, sur l'autre face du cintre, sur toute la longueur dudit cintre.

Ceci résulte de la division du crochet 5, et en particulier de sa section transversale, de manière continue, selon deux branches se raccordant de manière continue aux deux extrémités distales 9 et 11 respectivement. En correspondance, au niveau du crochet 5, l'âme formée par le fond 15 et les deux jambes 16 se trouve divisée de manière continue en deux branches, appartenant aux deux bras 7 et 8 respectivement

De manière préférée, la section est inscrite dans une forme non anguleuse, qui est choisie parmi la forme ovale, la forme ronde ou la forme carre-rond. Ainsi, les ailes 18 et 19 présentent, au moins du côté extérieur à la section en W, une forme arrondie dont la concavité est tournée vers les jambes 16 et 17 de cette section.

Le vêtement destiné à être porté par ce cintre, repose sur l'une des ailes 18 ou 19, dans le cas présent sur l'aile 19, sans être déformé par la forme de cette aile, puisque celle-ci est de forme arrondie.

En outre, selon une caractéristique essentielle de la présente invention, la section en W est de dimensions continûment évolutives pour que le cintre soit de section droite renforcée ou plus importante, dans les tronçons de ce cintre qui subissent des sollicitations les plus élevées.

Comme plus particulièrement montré par les figures 3 et 4, la section des bras 7 et 8, dans leur partie médiane, peut ainsi être de dimensions supérieures à celles de la section du reste des bras. En particulier, les dimensions augmentent selon une première direction s'étendant dans le plan dudit cintre, et/ou selon une deuxième direction s'étendant dans une direction transversale audit plan. Ainsi, le cintre peut posséder des zones dont la hauteur et/ou la largeur du cintre sont augmentées.

Ces dimensions élargies permettent de renforcer la résistance à la flexion et à la torsion du cintre lorsque celui-ci est chargé. La section continue en W a pour avantage d'offrir un très bon compromis poids/caractéristiques mécanique par rapport à une autre section.

On comprend par ailleurs que les faces avant 21 et arrière 22 peuvent être également considérées respectivement arrière et avant. La structure du cintre selon la présente invention permet en effet d'utiliser ce cintre indifféremment selon l'une ou l'autre de ses faces.

Le fond 15 correspond à un creux sur l'une des faces, alors qu'il correspond à une partie pleine sur l'autre face. De même, les zones de raccordement des jambes 15,16 avec les retours 18,19 correspondent à des parties pleines sur l'une des faces, alors qu'elles correspondent aux gorges 24, 25 sur l'autre face.

L'alternance des gorges avec des parties pleines sur chacune des faces du cintre donne au cintre un effet qualitatif, puisque l'utilisateur considère que la structure est quasi-symétrique. Cet effet est renforcé lorsque l'utilisateur saisit le cintre, dans la mesure où la section est non anguleuse et possède une forme volumique.

L'aile 18 de la partie médiane des bras 7,8 est venue de matière avec des reliefs 29. Ces reliefs augmentent la force d'accrochage des vêtements supportés par les bras. Cette aile 18 peut être considérée, pour les bras, comme étant l'aile supérieure de la section, puisqu'elle est vient au contact des vêtements. Sa forme concave permet de ne pas abîmer les vêtements supportés par le cintre 1.

Les extrémités proximales 10, 12 des deux bras 7, 8 sont recourbées l'une vers l'autre pour être solidaires d'une barre transversale 30. Cette barre est destinée à, par exemple, porter un pantalon, et est de même section que les autres parties constitutives du cintre décrites ci-dessus. Pour renforcer les caractéristiques mécaniques du cintre, la section des extrémités recourbées est également de dimensions augmentées selon la direction transversale au plan du cintre.

En outre, le cintre 1 possède une nervure 31 qui relie les premier et deuxième bras 7, 8, au voisinage de leurs extrémités distales 9, 11. Cette nervure 31 définit avec les extrémités distales 9, 11 des bras une forme oblongue, délimitant une fenêtre 32. La nervure est par exemple plane. En variante, la section de cette nervure est identique à la section du crochet 2 et des bras 7,8. En outre, chacun des bras 7, 8 possède une rupture de forme dans la zone de raccordement avec la nervure 31, pour améliorer encore les caractéristiques mécaniques du cintre.

## Revendications

1. Cintre pour vêtement, en matière plastique injectée, comprenant :
- un crochet de suspension (2) pour suspendre ledit cintre à un support extérieur au cintre, comprenant une tête (4) et une base (5),
- un corps porteur (3) prévu pour supporter au moins un vêtement comprenant au moins un premier (7) et un deuxième (8) bras, qui s'étendent selon sensiblement une même direction longitudinale et en sens opposés, le crochet (2) et les deux bras (7, 8) étant venus de matière ensemble et définissant sensiblement un même plan,
- chacun des premier (7) et deuxième (8) bras comprenant une extrémité distale (9, 11) et une extrémité proximale (10, 12), les extrémités distales (9, 11) des deux bras (7, 8) se raccordant à la base (5) du crochet (2),
- les premier (7) et deuxième (8) bras étant de section transversale en creux, et comprenant un fond (15) et deux jambes (16, 17) qui sont orientées transversalement au plan du cintre (1),
**caractérisé en ce que** le crochet (2) a la même section transversale en creux que celle des premier (7) et deuxième (8) bras, c'est-à-dire comprenant un fond (15) et deux jambes (16, 17), et ladite section transversale en creux du crochet se raccorde aux extrémités distales (9, 11) des deux bras (7, 8) respectivement, de manière continue, par ramification.

2. Cintre pour vêtement selon la revendication 1, **caractérisé en ce que** la section en creux comprend deux autres ailes (18, 19) qui s'étendent respectivement à partir des jambes (16, 17) pour définir un W, de sorte que le cintre (1) comporte une face avant (21) comprenant une gorge (23) et une face arrière (22) comprenant deux gorges (24, 25).

3. Cintre pour vêtement selon la revendication 1, **caractérisé en ce que** la section en creux est inscrite dans une forme non anguleuse, choisie parmi la forme ovale, la forme ronde ou la forme carré-rond.

4. Cintre pour vêtement selon la revendication 1, **caractérisé en ce que** la section en creux est de dimensions continûment évolutives selon une première direction s'étendant dans le plan du cintre, et/ou selon une deuxième direction s'étendant dans une direction transversale au plan du cintre, de sorte que le cintre est de section droite renforcée dans les tronçons à sollicitations élevées.

5. Cintre pour vêtement selon la revendication 1, **caractérisé en ce que** le cintre (1) comprend en outre un barre transversale (30) qui s'étend entre les extrémités proximales (10, 12) des bras (7, 8) et qui est venue de matière avec lesdits bras (7, 8).

6. Cintre pour vêtement selon la revendication 1, **caractérisé en ce que** le cintre (1) comprend en outre un nervure (31) qui relie les premier et deuxième bras (7, 8), au voisinage de leurs extrémités distales (9, 11).
